# EUROPÄISCHE PATENTSCHRIFT

(11) **EP 2 174 842 B1**
(45) Veröffentlichungstag und Bekanntmachung des Hinweises auf die Patenterteilung: **25.07.2012**
(21) Anmeldenummer: 08017842.9
(22) Anmeldetag: 10.10.2008
(51) Int. Cl.: B60R 21/232, B60R 21/201

(54) **Luftsackanordnung**
Air bag assembly
Installation de coussin d'air

(43) Veröffentlichungstag der Anmeldung: 14.04.2010
(73) Patentinhaber: Autoliv Development AB, 447 83 Vårgårda (SE)
(72) Erfinder: Guthke, Detlev, 58089 Hagen (DE); Maiwald, Helmut, 51515 Kürten (DE); Kreher, Andre Stephen, 42289 Wuppertal (DE); Büscher, Wolfgang, 40822 Mettmann (DE)
(74) Vertreter: Schön, Thilo

(56) Entgegenhaltungen:
- EP-A- 1 772 328
- DE-A1- 19 712 039
- DE-A1-102005 002 085
- US-B1- 6 340 171

## Beschreibung

Die vorliegende Erfindung betrifft eine Luftsackanordnung für ein Kraftfahrzeug mit einem von einer Umhüllung aufgenommenen Luftsack, welcher dazu dient, im Crashfall Insassen eines Kraftfahrzeugs vor etwaigen Aufprallverletzungen zu schützen.

Bei einer derartigen Luftsackanordnung handelt es sich bei dem Luftsack um ein im Crashfall aufblasbares Kissen, welches im nicht aktivierten Zustand der Luftsackanordnungen zusammenfaltet ist und von der Umhüllung umgeben wird, welche ihrerseits z.B. eine Perforation oder Sollbruch- bzw. -rissstelle (beispielsweise in Form einer Reisnaht) aufweist, entlang derer sie bei der Aktivierung der Luftsackanordnung infolge des sich ausdehnenden Luftsacks leicht aufbrechen bzw. -reißen kann.

Insbesondere Seiten- und Kopfairbags werden in aller Regel zwischen der Innenverkleidung des Fahrgastraums und der Karosserie angeordnet. Bei der Aktivierung eines solchen Airbags tritt dabei der sich entfaltende Luftsack entlang eines definierten Bereichs aus der Innenverkleidung des Fahrgastraums hervor, um die gewünschte Schutzfunktion wahrnehmen zu können. Bei diesem definierten Bereich kann es sich beispielsweise um eine Stoßstelle handeln, an der zwei benachbarte Innenverkleidungsteile des Fahrgastraums aneinander angrenzen, sodass der sich entfaltende Luftsack dort aus der Innenverkleidung hervortreten kann.

Da ein derartiger Luftsack üblicherweise über seine ihn umgebende Umhüllung an der Fahrzeugkarosserie mittelbar fixiert sein kann, befindet sich der Luftsack nicht in direkter Nähe zur Innenverkleidung, weshalb ein Bedarf danach besteht, dafür zu sorgen, dass der sich im Crashfall entfaltende Luftsack tatsächlich auf dem gewünschten Weg in den Fahrgastraum gelangt.

Die gattungsbildende US 6,340,171 B1 zeigt eine Luftsackanordnung mit einem von einer Umhüllung umgebenen Luftsack. In dieser Umhüllung ist unterhalb des Luftsacks weiterhin ein langgestreckter Formkörper aufgenommen, wobei sich Gassack und Formkörper in unterschiedlichen Kammern der Umhüllung befinden. Der Formkörper dient dazu, den Kopf eines Insassen bei einem Unfall aufzufangen, bei dem der Luftsack nicht aufgeblasen wird.

Die DE 197 12 039 A1 zeigt ebenfalls eine Luftsackanordnung mit einem von einer Umhüllung umgebenen Luftsack. Oberhalb dieses Luftsacks erstreckt sich parallel zu diesem innerhalb der Umhüllung ein Draht, mittels dessen der Luftsack über Beschlagteile mit dem Fahrzeug verbunden ist.

Der Erfindung liegt daher die Aufgabe zugrunde, eine Luftsackanordnung anzugeben, welche eine optimierte Positionierung ihrer Umhüllung und damit ihres Luftsacks ermöglicht, sodass sich dieser im Crashfall ungehindert entfalten kann.

Diese Aufgabe wird mit einer Luftsackanordnung gelöst, welche die Merkmale des Anspruchs 1 aufweist.

Erfindungsgemäß ist vorgesehen, dass in der Umhüllung der Luftsackanordnung, insbesondere auf der Seite, die im eingebauten Zustand der Luftsackanordnung an einer Fahrzeugkarosserie zu liegen kommt, zumindest eine Aufnahme ausgebildet ist, in der ein unabhängig von der Fahrzeugkarosserie handhabbarer Positionierungskörper zur Positionierung der Luftsackanordnung relativ zur Fahrzeugkarosserie angeordnet ist oder angeordnet werden kann.

Damit ist erfindungsgemäß die Umhüllung nicht nur als Hülle für den zusammengefalteten Luftsack vorgesehen, sondern gleichzeitig als Halterung oder Aufnahme für einen Positionierungskörper ausgebildet. In vorteilhafter Weise wird also mit der Umhüllung eine ohnehin vorhandene Komponente der Luftsackanordnung zu Positionierungszwecken genutzt. Zusätzliche Bauteile oder Materialabschnitte zur Aufnahme oder Halterung des Positionierungskörpers sind erfindungsgemäß nicht erforderlich.

Aus dem Stand der Technik ist es bekannt, derartige Positionierungskörper direkt an der Karosserie vorzusehen, um dadurch den Luftsack bzw. dessen Umhüllung in eine für die Entfaltung des Luftsacks optimale Position zu bringen. Allerdings ist eine derartige Anbringung von Positionierungskörpern an der Karosserie aufgrund der damit verbundenen höheren Produktionskosten häufig nicht erwünscht, zumal eine derartige Herangehensweise verhältnismäßig unflexibel ist. Von Vorteil ist erfindungsgemäß insbesondere, dass der Positionierungskörper zu einem Bestandteil der Luftsackanordnung gemacht werden kann und nicht einen Teil der Fahrzeugkarosserie bilden muss.

Erfindungsgemäß wird daher eine Möglichkeit geschaffen, welche es erlaubt, einen separaten Positionierungskörper direkt an der Umhüllung anbringen zu können, um den Luftsack ganz gezielt in die jeweils gewünschte Einbaulage bringen zu können. Einen solchen Positionierungskörper, welcher z.B. als Abstandshalter zur Beabstandung der Umhüllung von der Fahrzeugkarosserie und somit als Entfaltungshilfe für den Luftsack dienen kann, in zumindest einer durch die Umhüllung selbst gebildeten Aufnahme direkt an der Außenseite der Umhüllung und nicht an der Karosserie anzuordnen, erweist sich dabei insbesondere dahingehend als vorteilhaft, dass dadurch die Positionierung der Luftsackanordnung hinsichtlich des jeweils im Fahrzeug verbauten Luftsacktyps optimiert werden kann. Wenn beispielsweise im Rahmen einer Modellpflege eines Kraftfahrzeugs eine andere Luftsackanordnung als zuvor verbaut werden soll, ist es daher nicht erforderlich, etwaige an der Fahrzeugkarosserie befindliche Positionierungskörper anders zu platzieren oder in ihrer Gestalt anders auszubilden; vielmehr kann dadurch, dass der Positionierungskörper in einer durch die Umhüllung selbst gebildeten Aufnahme angeordnet und unabhängig von der Fahrzeugkarosserie handhabbar ist, die Lage des Positionierungskörpers an der Umhüllung bereits durch den die Luftsackanordnung herstellenden Zulieferer an die geänderte Situation angepasst werden, sodass keine aufwändigen Modifikationen an der Fahr zeugkarosserie selbst vorgenommen werden müssen.

Die zumindest eine Aufnahme ist durch eine im Material der Umhüllung ausgebildete Öffnung begrenzt oder definiert. Der Positionierungskörper lässt sich somit durch die Öffnung in die Aufnahme einführen, um anschließend von der Aufnahme zumindest teilweise aufgenommen zu werden. In einem einfachen Fall kann es sich beispielsweise bei der Öffnung um ein einfaches Loch oder einen einzelnen Schlitz oder Einschnitt in der Umhüllung handeln.

Die erfindungsgemäße Luftsackanordnung erweist sich ferner durch die Tatsache als vorteilhaft, dass der Positionierungskörper Bestandteil der Luftsackanordnung ist und somit während der Endmontage des Kraft fahrzeugs nicht als selbstständiges Bauteil verbaut werden muss, was sich insbesondere in produktionswirtschaftlicher Hinsicht als vorteilhaft erweist.

Vorteilhafte Ausführungsformen der Erfindung ergeben sich aus den Unteransprüchen, der Beschreibung sowie den Zeichnungen.

Bevorzugt ist vorgesehen, dass die Aufnahme in einem Bereich der Umhüllung ausgebildet ist, der mit seiner Innenseite unmittelbar am zusammengefalteten Luftsack anliegt.

Vorzugsweise ist die Aufnahme dazu ausgebildet ist, lediglich einen Teil des Positionierungskörpers aufzunehmen.

Der Positionierungskörper kann gemäß einem weiteren Ausführungsbeispiel durch die Umhüllung hindurch gefädelt oder mit der Umhüllung verwoben werden.

Um den Positionierungskörper besonders zuverlässig mit der Umhüllung verbinden zu können, ist es gemäß einer weiteren bevorzugten Ausführungsform vorgesehen, dass die zumindest eine Aufnahme der Umhüllung durch einen aus dem Material der Umhüllung ausgebildeten Steg gebildet wird, welcher durch zwei vorzugsweise im Wesentlichen parallele, im Material der Umhüllung ausgebildete Schlitze oder Einschnitte begrenzt wird.

Um den Positionierungskörper mit dem Luftsack zu verbinden, wird der Positionierungskörper bei dieser Ausführungsform in einen der beiden Schlitze ins Innere der Umhüllung eingeführt und aus dem anderen der beiden Schlitze wieder aus dem Inneren der Umhüllung herausgeführt. Anders ausgedrückt wird der Positionierungskörper also von außerhalb der Umhüllung hinter der Lasche hindurchgeführt, so dass der Positionierungskörper im Bereich der Lasche mit dem innerhalb der Umhüllung befindlichen Luftsack in Anlage gelangt. Der Positionierungskörper wird hierbei also gewissermaßen durch die Umhüllung hindurch gefädelt oder mit der Umhüllung verwoben.

Gemäß einer weiteren Ausführungsform erweist es sich als vorteilhaft, wenn die Umhüllung eine Vielzahl von durch jeweils zwei Schlitze oder Einschnitte begrenzten Laschen aufweist, wobei sich gemäß einer Ausführungsform ein einziger Positionierungskörper durch eine Mehrzahl der so gebildeten Aufnahmen hindurcherstrecken kann. Der Positionierungskörper erstreckt sich dabei entlang der Umhüllung abwechselnd auf der Außenseite der Umhüllung und auf der dem Inneren der Umhüllung zugewandten Seite der Laschen, so dass der Positionierungskörper gewissermaßen mit der Umhüllung verwoben ist. Hierdurch ist der Positionierungskörper nicht nur zuverlässig an der Umhüllung gesichert. Vielmehr erlaubt diese Ausführungsform, dass ein und derselbe Positionierungskörper über im Wesentlichen die gesamte Länge der Umhüllung geführt werden kann, um so die Umhüllung bzw. den davon aufgenommenen Luftsack über die gesamte Länge hinweg von der Fahrzeugkarosserie zu beabstanden. Gleichzeitig kann hierdurch eine Pendelbewegung des Luftsackpakets in Bezug auf die Fahrzeugkarosserie vermieden werden.

Um etwaige Pendelbewegung des Luftsackpakets weiter zu reduzieren, kann die Umhüllung auch auf der der Fahrzeugkarosserie abgewandten Seite mit entsprechenden Aufnahmen zur Aufnahme von Positionierungskörpern ausgestattet sein. Hierdurch kann verhindert werden, dass das Luftsackpaket infolge unerwünschter Pendelbewegungen an den Fahrzeughimmel oder andere Innenverkleidungsbauteile pendelnd anstößt, was ansonsten zu unerwünschten Geräuschen führen kann.

Gemäß einer weiteren Ausführungsform kann der Positionierungskörper ein aus einem elastischen, vorzugsweise aufgeschäumten Kunststoffmaterial (bspw. Polyethylen) gefertigter Körper sein. Die Herstellung des Positionierungskörpers aus einem elastischen Kunststoffmaterial kann sich dahingehend als vorteilhaft erweisen, dass dadurch der Positionierungskörper komprimiert werden kann, wodurch z. B. der Positionierungskörper in die zumindest eine Aufnahme der Umhüllung einfach eingeführt werden kann.

Eine derartige Komprimierung des Positionierungskörpers kann beispielsweise erforderlich sein, wenn dieser durch Reibschluss in der zumindest einen Aufnahme fixiert werden soll, wozu dessen Abmessungen im Wesentlichen auf die Gestalt und Größe der Aufnahme abzustimmen sind. Da sich in diesem Falle jedoch der Positionierungskörper nicht oder nur schlecht im unkomprimierten Zustand in die Aufnahme einführen lässt, erweist es sich als vorteilhaft, diesen aus einem elastischen, vorzugsweise aufgeschäumten Kunststoffmaterial wie beispielsweise Polyethylen (PE) zu fertigen, um ihn für den Einführvorgang in die Aufnahme komprimieren zu können.

Die Herstellung des Positionierkörpers aus einem Kunststoffmaterial wie beispielsweise Polyethylen, welches vorzugsweise zur Herstellung des Positionierungskörpers aufgeschäumt wird, erweist sich ferner dahingehend als vorteilhaft, dass dadurch gegenüber einem beispielsweise aus Metall gefertigten Positionierungskörper eine Kosteneinsparung von etwa 50 % und eine Gewichtseinsparung von bis zu ca. 90 % erreicht werden kann.

Gemäß einer weiteren Ausführungsform kann der Positionierungskörper aus einem zumindest im Wesentlichen unelastischen und/oder steifen Material gefertigt sein, da erkannt wurde, dass die Elastizität des von der Umhüllung aufgenommenen Luftsacks ausreicht, um den Positionierungskörper verliersicher in der jeweiligen Aufnahme zu halten. Bei dieser Ausführungsform kann es sich bei dem Positionierungskörper beispielsweise um ein rundes Voll- oder Hohlprofil aus Metall oder Kunststoff handeln, wobei jedoch beliebige Voll- oder Hohlkörper als Positionierungskörper Verwendung finden können. Beispielsweise können ein oder mehrere Rohr- oder Schlauchabschnitte mit unterschiedlichen Durchmessern als Positionierungskörper verwendet werden, um das Luftsackpaket an einzelnen Stellen individuell von der Fahrzeugkarosserie zu beabstanden, indem in den jeweiligen Aufnahmen je nach Größe der gewünschten Beabstandung Rohr- oder Schlauchabschnitte unterschiedlichen Durchmessers angeordnet werden. Insbesondere können äußerst kostengünstige, allgemein erhältliche Kunststoffrohre oder -schläuche verwendet werden, die anwendungsspezifisch einfach auf die benötigte Länge geschnitten werden können.

Gemäß einer weiteren bevorzugten Ausführungsform kann es sich bei dem Luftsack um einen zum Schutz des Kopfes eines Fahrzeuginsassen geeigneten Luftsack handeln, welcher im zusammengefalteten Zustand eine im Wesentlichen langgestreckte Gestalt aufweist. Der Luftsack sowie die zugehörige Umhüllung weisen dabei eine derartige Gestalt auf, dass sie sich am Fahrzeughimmel z. B. zwischen einer A-Säule und einer C-Säule einer Fahrzeugkarosserie und/oder gegebenenfalls über eine B-Säule hinweg erstrecken können, wobei sich der Luftsack samt Umhüllung im Falle, dass die Fahrzeugkarosserie über weitere Säulen (z. B. D- oder E-Säule) verfügen sollte, bis dorthin erstrecken kann. Da im Falle eines Crashs häufig die Gefahr besteht, dass beispielsweise die C-Säule einschließlich der die C-Säule verkleidenden Innenverkleidung nach oben geschoben wird und dadurch die ungestörte Entfaltung des Luftsacks behindert, ist bei dieser Ausführungsform vorgesehen, dass sich der Positionierungskörper zumindest in einem Bereich der Umhüllung befindet, welcher sich im montierten Zustand bei einer der genannten Säulen befindet, um die Umhüllung von der Karosserie zu beabstanden. Der Positionierungskörper kann sich dabei über im Wesentlichen die gesamte Länge der Umhüllung erstrecken, so dass diese über ihre gesamte Länge hinweg optimal positioniert ist. Alternativ dazu kann es jedoch ebenfalls vorgesehen sein, dass nur im Bereich der jeweiligen Säulen Positionierungskörper in entsprechenden Aufnahmen in der Umhüllung platziert werden. Auf diese Weise kann der Luftsack insbesondere im Bereich der genannten Säulen nahe an der Innenverkleidung des Fahrgastraums positioniert werden, sodass die Entfaltung des Luftsacks infolge sich nach oben bewegender A-, Bund/oder C-Säulen (oder weiterer Säulen) nicht behindert wird.

Im Folgenden wird die Erfindung rein exemplarisch anhand einer beispielhaften Ausführungsform unter Bezugnahme auf die beigefügten Zeichnungen beschrieben, wobei
- Fig. 1: eine perspektivische Darstellung einer erfindungsgemäßen Luftsackanordnung zeigt;
- Fig. 2: zwei Schnittdarstellungen durch die Luftsackanordnung der Fig. 1 zeigt;
- Fig. 3: eine Ansicht der Umhüllung der erfindungsgemäßen Luftsackanordnung zeigt; und
- Fig. 4: eine Einbausituation der erfindungsgemäßen Luftsackanordnung im Bereich der B-Säule einer Fahrzeugkarosserie zeigt.

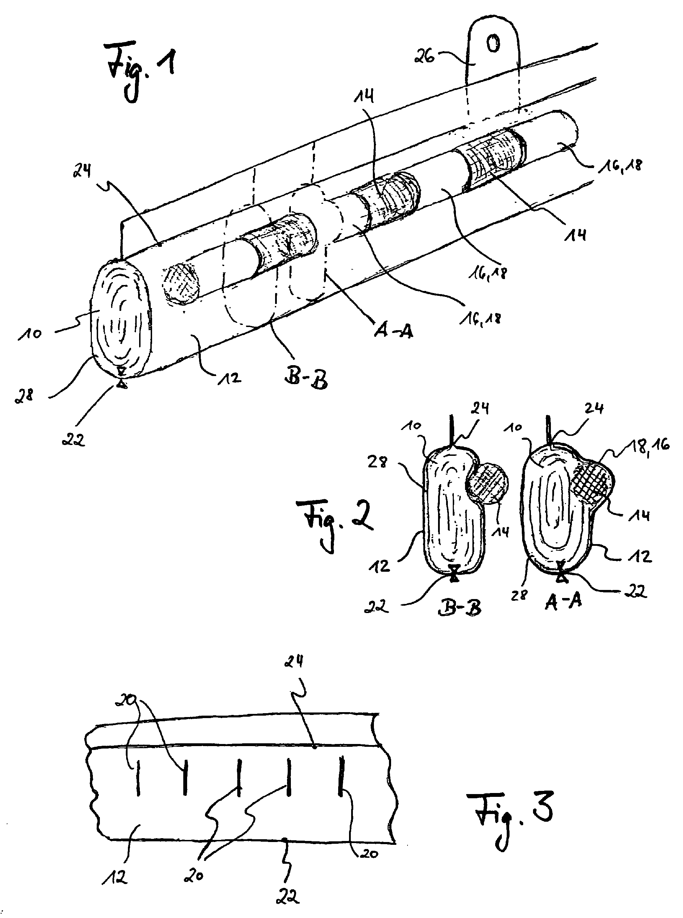

Die Fig. 1 zeigt eine perspektivische Darstellung einer erfindungsgemäßen Luftsackanordnung, welche die Luftsackanordnung von einer Fahrzeugkarosserie aus betrachtet zeigt, an der sie mit Hilfe von Befestigungslaschen 26 angebracht werden kann.

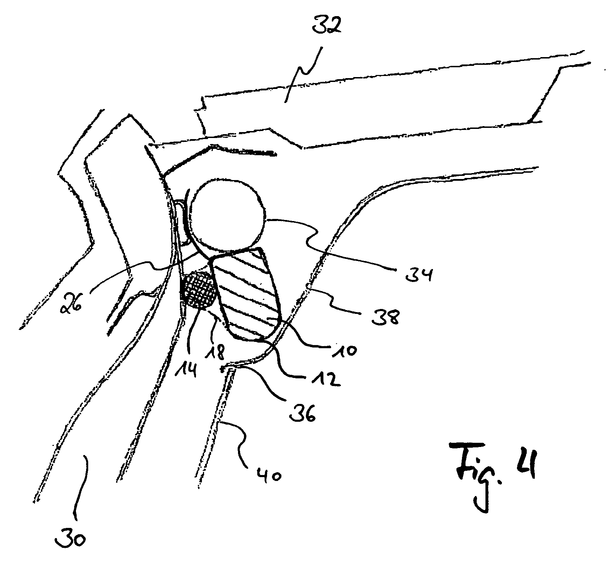

Die Luftsackanordnung weist eine aus einem Vlies- oder Gewebematerial gefertigte Umhüllung 12 sowie einen Luftsack 10 auf, welcher von der Umhüllung 12 in einem zusammengefalteten Zustand aufgenommen wird. Sowohl der Luftsack 10 als auch die Umhüllung 12 weisen in der hier dargestellten Ausführungsform eine langgestreckte Gestalt auf, um sich beispielsweise zum Schutz des Kopfes eines Fahrzeuginsassen am Fahrzeughimmel durchgehend oder bereichsweise zwischen einer A-Säule und einer C-Säule (oder ggf. bis hin zu einer E-Säule) einer Fahrzeugkarosserie und gegebenenfalls über alle dazwischen liegenden Säulen hinweg zu erstrecken (Fig. 4). Die Umhüllung 12 ist vorzugsweise aus einem Vliesmaterial gefertigt, welches zusammengelegt und entlang einer Schließnaht 24 zusammengenäht wurde, so dass auf diese Weise durch die Umhüllung 12 ein rohr- oder schlauchförmiger Innenraum 28 für den zusammengefalteten Luftsack 10 geschaffen wird.

An der der Schließnaht 24 gegenüberliegenden Seite weist die aus einem Vliesmaterial bestehende Umhüllung 12 eine Perforation 22 auf, wodurch eine Sollbruch- bzw. -rissstelle geschaffen wird, entlang der die Umhüllung 12 infolge einer Ausdehnung des Luftsacks 10 im Crashfall aufbrechen oder aufreißen kann. Im Falle, dass die Umhüllung 12 aus einem Gewebematerial gefertigt sein sollte, kann die Umhüllung auch aus zwei separaten, aufeinander gelegten und entlang der Schließnaht 24 sowie einer dieser Schließnaht 24 gegenüberliegenden Reißnaht 22 zusammengenäht sein, entlang der die Umhüllung 12 infolge einer Ausdehnung des Luftsacks 10 im Crashfall aufreißen kann.

Wie am besten der Fig. 3 entnommen werden kann, weist die Umhüllung 12 auf der Seite, die im eingebauten Zustand der Luftsackanordnung an einer Fahrzeugkarosserie zu liegen kommt, eine Vielzahl von Schlitzen 20 auf, welche im wesentlichen parallel zueinander verlaufen und vorzugsweise gleichmäßig in Längsrichtung der Umhüllung 12 zueinander beabstandet sind. Durch je zwei aufeinanderfolgende Schlitze 20 wird somit jeweils eine Lasche 18 in dem Vlies- oder Gewebematerial der Umhüllung 12 ausgebildet, um als Halterung oder Aufnahme für einen Positionierungskörper 14 zu dienen. Die Lasche 18 kann auch als Tasche oder Steg bezeichnet werden und bildet eine Aufnahme im Sinne der Erfindung für einen Teil des Positionierungskörpers 14.

Es ist nicht zwingend, dass zwei unmittelbar aufeinanderfolgende Schlitze 20 eine Aufnahme bilden. Eine Aufnahme kann auch von zwei Schlitzen 20 gebildet werden, zwischen denen sich ein oder mehrere weitere Schlitze 20 befinden, d.h. zur Halterung des Positionierungskörpers 14 an der Umhüllung 12 können ein oder mehrere Schlitze 20 gewissermaßen "übersprungen" werden.

Bei dem Positionierungskörper 14 handelt es sich in der dargestellten Ausführungsform um eine langgestreckte Schaumstoffstange oder -schnur aus beispielsweise aufgeschäumtem Polyethylen. Um den Positionierungskörper 14 mit der Umhüllung 12 zu verbinden, wird der Positionierungskörper 14 durch einen der Schlitze 20 ins Innere der Umhüllung 12 eingeführt und aus einem der nächsten Schlitze 20 wieder aus dem Inneren der Umhüllung 12 herausgeführt, so dass der Positionierungskörper 14 hinter der durch diese beiden Schlitze 20 begrenzten Lasche 18 entlang verläuft und dabei mit dem Luftsack 10 in Anlage gelangt, wie dies am besten im Schnitt A-A der Fig. 2 zu sehen ist.

Im Falle, dass sich der Positionierungskörper 14 über eine größere Länge des Luftsacks 10 hinweg erstrecken soll, wie dies in der dargestellten Ausführungsform der Fall ist, kann der Positionierungskörper 14 in der oben beschriebenen Art und Weise durch mehrere jeweils von zwei Schlitzen 20 gebildete Laschen 18 hindurchgefädelt werden, so dass sich der Positionierungskörper 14 in Längsrichtung der Umhüllung 12 betrachtet abwechselnd auf der Außenseite der Umhüllung 12 (s. Schnitt B-B der Fig. 2) und auf der Innenseite der Umhüllung 12 (s. Schnitt A-A der Fig. 2) erstreckt, so das der Positionierungskörper 14 gewissermaßen mit der Umhüllung 12 verwoben ist.

Damit der Positionierungskörper 14, nachdem er in der zuvor beschriebenen Art und Weise mit der Umhüllung 12 verwoben wurde, sicher von den Laschen 18 gehalten wird, kann der Positionierungskörper 14 Abmessungen aufweisen, welche jene der durch die Laschen 18 definierten Aufnahmen geringfügig überschreiten. Um dennoch den Positionierungskörper 14 in die von den Laschen 18 gebildeten Aufnahmen einführen zu können, kann der Positionierungskörper 14 in der zuvor beschriebenen Art und Weise aus einem elastischen Kunststoffmaterial wie beispielsweise aufgeschäumtem Polyethylen gefertigt sein, so dass er für den Einfädelvorgang in die Laschen 18 komprimiert werden kann. Auch der zusammengefaltete Luftsack 10 weist eine gewisse Nachgiebigkeit auf, die das Einfädeln des Positionierungskörpers 14 erleichtert.

Der gefaltete Luftsack 10 weist infolge seiner Faltung eine gewisse Eigenelastizität auf und ist ausreichend stramm von der Umhüllung 12 umgeben, so dass der Positionierungskörper 14 im verbundenen, von den Laschen 18 gehaltenen Zustand das von dem zusammengefalteten Luftsack 10 gebildete Materialpaket eindrückt, wie es Fig. 2 entnommen werden kann. Hierdurch übt der gefaltete Luftsack 10 infolge seiner Eigenelastizität eine gewisse Reaktionskraft auf den Positionierungskörper 14 aus, so dass dieser reibschlüssig und damit verliersicher in den Laschen 18 gehalten ist. Infolge der Reaktionskraft, die der gefaltete Luftsack 10 auf den Positionierungskörper 14 ausübt, ist es somit nicht zwangsweise erforderlich, den Positionierungskörper 14 selbst aus einem elastischen Material auszubilden; vielmehr kann der Positionierungskörper 14 auch aus einem steifen Material wie beispielsweise aus einem steifen Rohrabschnitt gefertigt sein, da er von dem gefalteten Luftsack 10 gegen die Innenseite der Laschen 18 gedrückt und damit verliersicher gehalten wird.

Mit Hilfe des Positionierungskörpers 14 ist es somit möglich, die Umhüllung 12 an potentiell kritischen Stellen gezielt so in Bezug auf eine Fahrzeugkarosserie zu positionieren, dass die Entfaltung des Luftsacks 10 im Crashfall nicht nur nicht behindert, sondern eine ungestörte Entfaltung des Luftsacks 10 in der bestimmungsgemäßen Weise vielmehr aktiv unterstützt wird, wie dies im Folgenden anhand der in der Fig. 4 dargestellten Einbausituation der erfindungsgemäßen Luftsackanordnung im Bereich der B-Säule 30 erläutert wird.

Wie der Fig. 4 entnommen werden kann, erstreckt sich der Luftsack 12 in Längsrichtung entlang eines seitlichen Randbereichs des Fahrzeugdachs 32, das in die B-Säule 30 sowie die hier nicht dargestellten A- und C-Säulen des Fahrzeugs übergeht. Die erfindungsgemäße Luftsackanordnung ist dabei mittels mehrerer Befestigungslaschen 26 an der Fahrzeugkarosserie befestigt und würde ohne die Anordnung des Positionierungskörpers 14 unmittelbar mit der B-Säule 30 in Anlage gelangen, so dass nicht zuverlässig sichergestellt wäre, dass der sich infolge der Aktivierung des Gasgenerators 34 entfaltende Luftsack 10 in bestimmungsgemäßer Weise durch den Spalt 36, an der der Fahrzeughimmel 38 und die B-Säulen-Verkleidung 40 aneinander stoßen, ins Innere der Fahrgastzelle gelangt. Vielmehr bestünde die Gefahr, dass der Luftsack 10 sich hinter der Verkleidung 40, also zwischen der B-Säule 30 und deren Verkleidung 40, ausbreitet.

Erfindungsgemäß ist daher die Umhüllung 12 auf jener Seite, welche der Fahrzeugkarosserie bzw. der B-Säule 30 zugewandt ist, in der erfindungsgemäßen Art und Weise mit dem Positionierungskörper 14 versehen, welcher das Luftsackpaket 10, 12 von der B-Säule 30 beabstandet und in unmittelbare Nähe zu dem Spalt 36 zwischen dem Fahrzeughimmel 38 und der B-Säulen-Verkleidung 40 drängt, wodurch zuverlässig sichergestellt wird, dass der sich entfaltende Luftsack 10 in der gewünschten Art und Weise durch den Spalt 36 ins Innere der Fahrgastzelle gelangt, um bestimmungsgemäß seine Schutzfunktion zu erfüllen.

Die Erfindung erlaubt somit auf denkbar einfache und kostengünstige Weise eine Ausrichtung der Luftsackanordnung im Fahrzeug derart, dass eine Ausbreitungsrichtung des Luftsacks in Bezug auf die Einbausituation gezielt und eindeutig vorgegeben werden kann. Insbesondere ist die Luftsackanordnung Material sparend, da die Aufnahmen für den/die Positionierungskörper durch die Umhüllung des Luftsacks selbst geschaffen werde. Darüber hinaus ist die erfindungsgemäße Luftsackanordnung sehr flexibel an die jeweilige Einbausituation anpassbar, da das Material sowie die Gestalt des Positionierungskörpers einschließlich dessen Länge annährend beliebig gewählt werden können. Die Flexibilität der Luftsackanordnung wird ferner dadurch gesteigert, dass die die Aufnahmen bildenden Schlitze an nahezu jeder Stelle der Umhüllung und in unterschiedlichsten Längen zur Aufnahme unterschiedlich großer Positionierungskörper vorgesehen werden können.

### Bezugszeichenliste

- 10: Luftsack
- 12: Umhüllung
- 14: Positionierungskörper
- 16: Aufnahme
- 18: Tasche, Lasche, Steg
- 20: Schlitz
- 22: Perforation bzw. Reißnaht
- 24: Schließnaht
- 26: Befestigungslasche
- 28: Innenraum von 12
- 30: B-Säule
- 32: Fahrzeugdach
- 34: Gasgenerator
- 36: Spalt
- 38: Fahrzeughimmel
- 40: B-Säulen-Verkleidung

## Patentansprüche

1. Luftsackanordnung für ein Kraftfahrzeug mit einem aufblasbaren Luftsack (10) und einer Umhüllung (12), die den Luftsack (10) im zusammengefalteten Zustand umgibt,
wobei
in der Umhüllung (12), insbesondere auf der Seite, die im eingebauten Zustand der Luftsackanordnung an einer Fahrzeugkarosserie zu liegen kommt, zumindest eine Aufnahme (16) ausgebildet ist, in der ein unabhängig von der Fahrzeugkarosserie handhabbarer Positionierungskörper (14) zur Positionierung der Luftsackanordnung relativ zur Fahrzeugkarosserie angeordnet ist oder angeordnet werden kann,
**dadurch gekennzeichnet, dass**
die zumindest eine Aufnahme (16) durch zumindest eine in der Umhüllung (12) ausgebildete Öffnung (20) definiert oder begrenzt wird, die insbesondere ohne Wegnahme von Material der Umhüllung (12) hergestellt ist.

2. Luftsackanordnung nach Anspruch 1,
**dadurch gekennzeichnet, dass**
die Aufnahme (16) in einem Bereich der Umhüllung (12) ausgebildet ist, der mit seiner Innenseite unmittelbar am zusammengefalteten Luftsack (10) anliegt.

3. Luftsackanordnung nach Anspruch 1 oder 2,
**dadurch gekennzeichnet, dass**
die Aufnahme (16) dazu ausgebildet ist, lediglich einen Teil des Positionierungskörpers (14) aufzunehmen.

4. Luftsackanordnung nach zumindest einem der voranstehenden Ansprüche,
**dadurch gekennzeichnet, dass**
die zumindest eine Aufnahme (16) als Tasche, Lasche oder Steg (18) ausgebildet ist.

5. Luftsackanordnung nach zumindest einem der voranstehenden Ansprüche,
**dadurch gekennzeichnet, dass**
die zumindest eine Aufnahme (16) durch einen Materialabschnitt der Umhüllung (12) gebildet wird, welcher durch zwei als Schlitze oder Einschnitte ausgebildete Öffnungen (20) im Material der Umhüllung (12) begrenzt wird.

6. Luftsackanordnung nach zumindest einem der voranstehenden Ansprüche,
**dadurch gekennzeichnet, dass**
die Umhüllung (12) eine Vielzahl von durch jeweils zwei Öffnungen (20) begrenzte Aufnahmen (16) aufweist, wobei sich insbesondere ein einziger Positionierungskörper (14) durch eine Mehrzahl der so gebildeten Aufnahmen (16) hindurcherstreckt, vorzugsweise durch jede zweite Aufnahme (16).

7. Luftsackanordnung nach zumindest einem der voranstehenden Ansprüche,
**dadurch gekennzeichnet, dass**
der Positionierungskörper (14) durch die Umhüllung (12) hindurch gefädelt oder mit der Umhüllung (12) verwoben ist.

8. Luftsackanordnung nach zumindest einem der voranstehenden Ansprüche,
**dadurch gekennzeichnet, dass**
der Positionierungskörper (14) eine langgestreckte Gestalt aufweist.

9. Luftsackanordnung nach zumindest einem der voranstehenden Ansprüche,
**dadurch gekennzeichnet, dass**
der Positionierungskörper (14) ein aus einem zumindest im Wesentlichen unelastischen und/oder steifen Material gefertigter Voll- oder Hohlkörper ist.

10. Luftsackanordnung nach zumindest einem der Ansprüche 1 bis 8,
**dadurch gekennzeichnet, dass**
der Positionierungskörper (14) ein aus einem elastischen Material, vorzugsweise aufgeschäumten Kunststoffmaterial, gefertigter Körper ist.

11. Luftsackanordnung nach zumindest einem der voranstehenden Ansprüche,
**dadurch gekennzeichnet, dass**
es sich bei dem Luftsack (10) um einen zum Schutz des Kopfes eines Fahrzeuginsassen geeigneten Luftsack (10) mit einer im zusammengefalteten Zustand langgestreckten Gestalt handelt.

12. Luftsackanordnung nach zumindest einem der voranstehenden Ansprüche,
**dadurch gekennzeichnet, dass**
der Luftsack (10) im zusammengefalteten Zustand eine Gestalt derart aufweist, dass er dazu geeignet ist, sich am Fahrzeughimmel zwischen einer ersten Säule und einer zweiten Säule einer Fahrzeugkarosserie und gegebenenfalls über eine dazwischen liegende Säule hinweg zu erstrecken, wobei der Positionierungskörper (14) zumindest in einem Bereich der Umhüllung (12) angeordnet ist, welcher bei einer der Säulen zu liegen kommt, um die Umhüllung (12) von der Karosserie zu beabstanden.

## Claims

1. Airbag arrangement for a motor vehicle, comprising an inflatable airbag (10) and a cover (12) which encloses the airbag (10) in the folded state, wherein there is formed in the cover (12), in particular on the side which comes to lie against a vehicle body in the installed state of the airbag arrangement, at least one holder (16) in which there is arranged or can be arranged a positioning body (14) for positioning the airbag arrangement relative to the vehicle body, which positioning body can be manipulated independently of the vehicle body, **characterised in that** the at least one holder (16) is defined or delimited by at least one opening (20) which is formed in the cover (12) and which is produced in particular without taking material away from the cover (12).

2. Airbag arrangement according to claim 1, **characterised in that** the holder (16) is formed in a region of the cover (12) which bears with its inner side directly against the folded airbag (10).

3. Airbag arrangement according to claim 1 or 2, **characterised in that** the holder (16) is designed to hold only a portion of the positioning body (14).

4. Airbag arrangement according to at least one of the preceding claims, **characterised in that** the at least one holder (16) is configured as a pocket, strap or web (18).

5. Airbag arrangement according to at least one of the preceding claims, **characterised in that** the at least one holder (16) is formed by a material portion of the cover (12) which is delimited by two openings (20) formed as slits or incisions in the material of the cover (12).

6. Airbag arrangement according to at least one of the preceding claims, **characterised in that** the cover (12) has a plurality of holders (16) which are delimited by in each case two openings (20), wherein in particular a single positioning body (14) extends through a plurality of the holders (16) thus formed, preferably through every second holder (16).

7. Airbag arrangement according to at least one of the preceding claims, **characterised in that** the positioning body (14) is threaded through the cover (12) or is interwoven with the cover (12).

8. Airbag arrangement according to at least one of the preceding claims, **characterised in that** the positioning body (14) has an elongate shape.

9. Airbag arrangement according to at least one of the preceding claims, **characterised in that** the positioning body (14) is a solid or hollow body made from an at least substantially non-elastic and/or stiff material.

10. Airbag arrangement according to at least one of claims 1 to 8, **characterised in that** the positioning body (14) is a body made from an elastic material, preferably foamed plastic material.

11. Airbag arrangement according to at least one of the preceding claims, **characterised in that** the airbag (10) is an airbag (10) which has a shape that is elongate in the folded state and which is suitable for protecting the head of a vehicle occupant.

12. Airbag arrangement according to at least one of the preceding claims, **characterised in that** the airbag (10) in the folded state has a shape such that it is suitable for extending along the vehicle roof lining between a first column and a second column of a vehicle body and optionally via an intermediate column, wherein the positioning body (14) is arranged at least in a region of the cover (12) which comes to lie on one of the columns, so as to distance the cover (12) from the body.

## Revendications

1. Installation de coussin d'air pour un véhicule automobile comportant un coussin d'air (10) gonflable et une enveloppe (12) qui entoure le coussin d'air (10) à l'état plié,
au moins un logement (16) étant réalisé dans l'enveloppe (12), en particulier sur le côté qui vient s'appuyer contre une carrosserie de véhicule lorsque l'installation de coussin d'air est montée, dans lequel logement est disposé ou peut être disposé un corps de positionnement (14) pouvant être manié indépendamment de la carrosserie de véhicule et servant à positionner l'installation à coussin d'air par rapport à la carrosserie de véhicule,
**caractérisée en ce que**
le au moins un logement (16) est défini ou limité par au moins une ouverture (20) réalisée dans l'enveloppe (12), laquelle ouverture est fabriquée en particulier sans retirer du matériau de l'enveloppe (12).

2. Installation de coussin d'air selon la revendication 1,
**caractérisée en ce que**
le logement (16) est réalisé dans une zone de l'enveloppe (12), laquelle zone repose par son côté intérieur directement au niveau du coussin d'air (10) plié.

3. Installation de coussin d'air selon la revendication 1 ou 2,
**caractérisée en ce que**
le logement (16) est réalisé afin de recevoir uniquement une partie du corps de positionnement (14).

4. Installation de coussin d'air selon au moins l'une quelconque des revendications précédentes,
**caractérisée en ce que**
le au moins un logement (16) est réalisé comme une poche, une éclisse ou une traverse (18).

5. Installation de coussin d'air selon au moins l'une quelconque des revendications précédentes,
**caractérisée en ce que**
le au moins un logement (16) est formé par une section de matériau de l'enveloppe (12), laquelle section est délimitée dans le matériau de l'enveloppe (12) par deux ouvertures (20) réalisées comme des fentes ou des entailles.

6. Installation de coussin d'air selon au moins l'une quelconque des revendications précédentes,
**caractérisée en ce que**
l'enveloppe (12) présente une pluralité de logements (16) délimités par respectivement deux ouvertures (20), un seul corps de positionnement (14) s'étendant en particulier à travers une multitude de logements (16) ainsi formés, de préférence à travers chaque deuxième logement (16).

7. Installation de coussin d'air selon au moins l'une quelconque des revendications précédentes,
**caractérisée en ce que**
le corps de positionnement (14) est enfilé à travers l'enveloppe (12) ou est tissé avec l'enveloppe (12).

8. Installation de coussin d'air selon au moins l'une quelconque des revendications précédentes,
**caractérisée en ce que**
le corps de positionnement (14) présente une forme allongée.

9. Installation de coussin d'air selon au moins l'une quelconque des revendications précédentes,
**caractérisée en ce que**
le corps de positionnement (14) est un corps plein ou creux fabriqué à partir d'au moins un matériau essentiellement inélastique et/ou rigide.

10. Installation de coussin d'air selon au moins l'une quelconque des revendications 1 à 8,
**caractérisée en ce que**
le corps de positionnement (14) est un corps fabriqué à partir d'un matériau élastique, de préférence à partir d'un matériau en plastique moussé.

11. Installation de coussin d'air selon au moins l'une quelconque des revendications précédentes,
**caractérisée en ce que**
le coussin d'air (10) constitue un coussin d'air (10) approprié pour la protection de la tête d'un passager du véhicule, lequel coussin d'air présente une forme allongée à l'état plié.

12. Installation de coussin d'air selon au moins l'une quelconque des revendications précédentes,
**caractérisée en ce que**
le coussin d'air (10) présente à l'état plié une forme telle qu'il est approprié pour s'étendre au niveau du plafond du véhicule entre une première colonne et une deuxième colonne d'une carrosserie de véhicule et éventuellement au-delà d'une colonne intercalée entre ces dernières, le corps de positionnement (14) étant disposé au moins dans une zone de l'enveloppe (12), laquelle zone vient se poser sur une des colonnes afin de tenir à l'écart l'enveloppe (12) de la carrosserie.
